# FASCICULE DE BREVET EUROPEEN

(11) **EP 3 172 939 B1**
(45) Date de publication et mention de la délivrance du brevet: **06.11.2019**
(21) Numéro de dépôt: 15738121.1
(22) Date de dépôt: 21.07.2015
(51) Int. Cl.: H04W 88/10, G06Q 30/02, H04W 4/80

(54) **BALISE INFORMATIVE A MULTIPLES INTERFACES DE COMMUNICATION**
INFORMATION-BAKE MIT MEHREREN KOMMUNIKATIONSSCHNITTSTELLEN
INFORMATION STATION WITH MULTIPLE COMMUNICATION INTERFACES

(30) Priorité: 25.07.2014 EP 14178632
(43) Date de publication de la demande: 31.05.2017
(73) Titulaire: The Swatch Group Research and Development Ltd., 2074 Marin (CH)
(72) Inventeur: RANDJELOVIC, Zoran, CH-2035 Corcelles (CH)
(74) Mandataire: Ravenel, Thierry Gérard Louis
(86) Numéro de dépôt international: PCT/EP2015/066611
(87) Numéro de publication internationale: WO 2016/012430

(56) Documents cités:
- US-A1- 2009 171 786
- US-B2- 8 688 147
- Tony Shore: "Ad-Pod-Plus System", , 10 avril 2013 (2013-04-10), XP054975666, Extrait de l'Internet: URL:https://www.youtube.com/watch?v=PBdK4d EzZRg [extrait le 2015-01-09]
- Anwar Craven: "Ad-pods Product Brochure", , 15 février 2014 (2014-02-15), XP002734269, Extrait de l'Internet: URL:http://www.ad-pods.com/downloads/produ ctbrochure.pdf [extrait le 2015-01-09]

## Description

La présente invention concerne une balise comprenant un microcontrôleur associé à une unité mémoire pour la sauvegarde de données, à un circuit d'horloge et un circuit de communication. Ce circuit de communication comprend une antenne, une première interface utilisant un premier protocole et une seconde interface utilisant un second protocole.

### ART ANTERIEUR

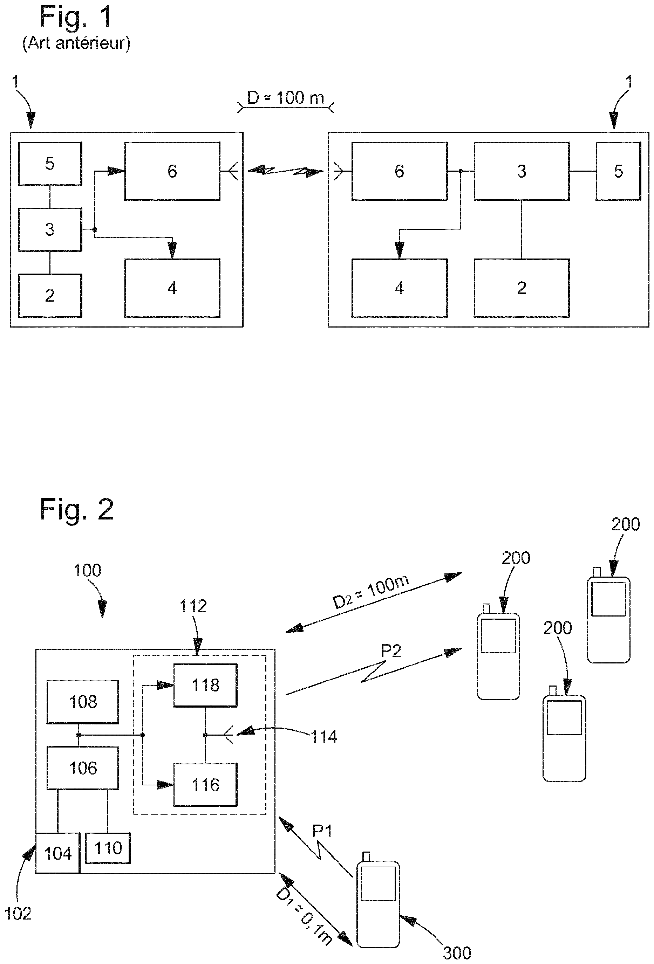

Il est connu des balises 1 c'est-à-dire des dispositifs électroniques autoalimentés par une alimentation 2 comprenant un microcontrôleur 3 associé à une unité mémoire 4 pour la sauvegarde de données, à un circuit d'horloge 5 et un circuit de communication 6 utilisant un protocole de communication comme visible à la figure 1.

Ces balises permettent, via leur circuit de communication, de diffuser des messages à destination de terminaux mobiles tels que des téléphones portables, tablettes ou ordinateurs. Ces terminaux mobiles sont donc compatibles avec le protocole de communication de la balise.

Les messages envoyés peuvent se présenter sous la forme de publicités ou de points d'intérêt. Par exemple, une balise située dans un grand magasin enverra, aux terminaux mobiles possédant une application dédiée audit grand magasin, des messages signalant aux consommateurs les offres de dernières minutes en cours dans le grand magasin. Dans un autre exemple, une balise située dans une zone aéroportuaire pourra fournir aux consommateurs des informations signalant des retards sur des vols spécifiques ou des informations de température et d'humidité aux voyageurs qui arrivent.

Le protocole de communication généralement utilisé est le protocole Bluetooth. Ce protocole Bluetooth définit en effet 3 classes d'émetteurs proposant des portées différentes en fonction de leur puissance d'émission allant de 1mW à 100mW pour une portée D allant respectivement de 10m à 100m.

Toutefois, un inconvénient de ce protocole Bluetooth est qu'il est par nature non sécurisé.

Comme ce protocole Bluetooth n'est pas sécurisé, il peut être nécessaire d'utiliser un autre protocole pour opérer un échange d'éléments confidentiels comme par exemple une clé de cryptage qui sera ensuite utilisée pour crypter la communication utilisant le protocole Bluetooth.

Par ailleurs, la portée de plusieurs mètres du protocole Bluetooth rend possible l'interception des données par un appareil tiers indésirable.

L'article de Tony Shore : "Ad-Pod-Plus System" du 10 avril 2013, sous la référence XP054975666 et extrait d'Internet sous le site https://www.youtube.com/watch?v=PBdK4dEzZRg, et l'article de Anwar Craven : "Ad-pods Product Brochure" du 15 février 2014 sous la référence XP002734269 et extrait d'Internet sous le site http://www.ad-pods.com/downloads/productbrochure.pdf, décrivent un système, qui est une assemblée de radios diverses reliées par câbles ou LAN (Wi-Fi) avec un logiciel pour leur fonctionnement. Les appareils ad-pods sont des balises (beacons), qui utilisent le protocole Bluetooth et le protocole Wi-Fi. Ils ne permettent pas de programmer une balise de manière sécurisée selon un protocole de communication en champ proche, ce qui est un inconvénient.

La demande de brevet 2009/0171786 A1 décrit un appareil publicitaire ayant un contrôleur, un panneau d'affichage, un lecteur et une étiquette électronique. Le contrôleur peut recevoir des informations publicitaires et des informations de l'étiquette, qui correspondent aux informations publicitaires. Le lecteur peut recevoir les informations d'étiquette du contrôleur pour les écrire dans l'étiquette pour pouvoir être lues par un dispositif portable. Cependant il n'est pas prévu pour recevoir des informations selon un premier protocole et transmettre des informations selon un second protocole différent du premier protocole.

### RESUME DE L'INVENTION

L'invention a pour but de fournir une balise de communication permettant d'être programmée ou configurée de façon sure tout en étant capable d'envoyer des données vers une multitude de terminaux mobiles.

A cet effet, l'invention concerne une balise de communication comprenant les caractéristiques définies dans la revendication indépendante 1.

Dans un premier mode de réalisation avantageux, le premier protocole est un protocole dont la portée est inférieure à 1 mètre.

Dans un deuxième mode de réalisation avantageux, le second protocole est un protocole dont la portée est supérieure à 1 mètre.

Dans un troisième mode de réalisation avantageux, le premier protocole est un protocole de communication en champ proche.

Dans un quatrième mode de réalisation avantageux, le second protocole est un protocole de communication Bluetooth™.

Dans un cinquième mode de réalisation avantageux, le premier protocole utilisé par la première unité d'interface permet également la transmission de données.

Dans un sixième mode de réalisation avantageux, la balise comprend en outre au moins un capteur fournissant des données représentatives d'une grandeur physique, ces données représentatives d'une grandeur physique étant diffusées par la seconde unité d'interface.

Dans un autre mode de réalisation avantageux, le capteur est un capteur de localisation.

Dans un autre mode de réalisation avantageux, des données provenant dudit au moins un capteur sont enregistrées dans l'unité mémoire de la balise.

Dans un autre mode de réalisation avantageux, des données peuvent être téléchargées par la première unité d'interface et stockées dans l'unité mémoire.

Dans un autre mode de réalisation avantageux, la première unité d'interface est reliée à une première antenne et la seconde unité d'interface est reliée à une seconde antenne.

Dans un autre mode de réalisation avantageux, la balise est munie d'un système récupérateur d'énergie pour l'alimentation de ladite balise.

Dans un autre mode de réalisation avantageux, la première unité d'interface est utilisée comme récupérateur d'énergie pour l'alimentation de ladite balise.

Dans un autre mode de réalisation avantageux, la balise comprend en outre une troisième unité d'interface utilisant un troisième protocole.

Dans un autre mode de réalisation avantageux, le troisième protocole est un protocole dont la portée est supérieure à celle du second protocole.

Dans un autre mode de réalisation avantageux, le troisième protocole permet la communication avec d'autres balises dont le circuit de communication comprend également une troisième unité d'interface utilisant un troisième protocole de sorte à créer un réseau entre ces balises.

### BREVE DESCRIPTION DES FIGURES

Les buts, avantages et caractéristiques de la présente invention apparaîtront plus clairement dans la description détaillée suivante d'au moins une forme de réalisation de l'invention donnée uniquement à titre d'exemple non limitatif et illustrée par les dessins annexés sur lesquels :
- la figure 1 représente de manière schématique une balise selon l'art antérieur;
- la figure 2 représente de manière schématique une balise selon l'invention;
- la figure 3 représente de manière schématique une balise selon une première variante de l'invention;
- la figure 4 représente de manière schématique une balise selon un second mode de réalisation de l'invention;
- la figure 5 représente de manière schématique une balise avec deux antennes et système récupérateur d'énergie ;
- la figure 6 représente de manière schématique une balise selon un troisième mode de réalisation de l'invention.

### DESCRIPTION DETAILLEE

Sur la figure 2 est représentée une balise 100 selon la présente invention. Cette balise 100 se présente sous la forme d'un boitier 102 dans lequel un dispositif électronique est placé. Ce dispositif électronique est alimenté par une unité d'alimentation 104. Cette unité d'alimentation 104 peut être une pile ou un accumulateur ou une unité autonome telle une cellule solaire. L'avantage d'une telle unité autonome est que cette dernière soit indépendante au niveau énergétique.

Le dispositif électronique comporte une unité de calcul ou microcontrôleur 106 associé à une unité mémoire 108. Cette unité mémoire 108 sert à stocker des données et peut être une mémoire non volatile utilisant la technologie flash (NOR, NAND).

Le dispositif électronique comporte également un circuit d'horloge 110 pour le cadencement de la balise 100 et comme base de temps précise pour l'enregistrement de données.

Le dispositif électronique comporte en outre un circuit de communication 112 comprenant au moins une antenne 114 pour communiquer avec l'extérieur. Ce circuit de communication 112 permet en outre d'envoyer des données vers des appareils dédiés 200 comme des téléphones mobiles, des tablettes, des ordinateurs ou des montres.

Ce circuit de communication 112 permet ainsi de recevoir et de transmettre des données de configuration et des données d'information pouvant être stockées dans l'unité mémoire 108.

Les données de configuration peuvent être la fréquence d'envoi de la balise ou des paramètres de consommation alors que les données d'information peuvent être des données telles que des données de localisation ou des données d'alerte liées à des applications spécifiques.

Avantageusement selon l'invention, le circuit de communication 112 comprend une première unité d'interface 116 et au moins une seconde unité d'interface 118, la première unité d'interface 116 fonctionnant selon un premier protocole P1 et la seconde unité d'interface 118 fonctionnant selon un second protocole P2.

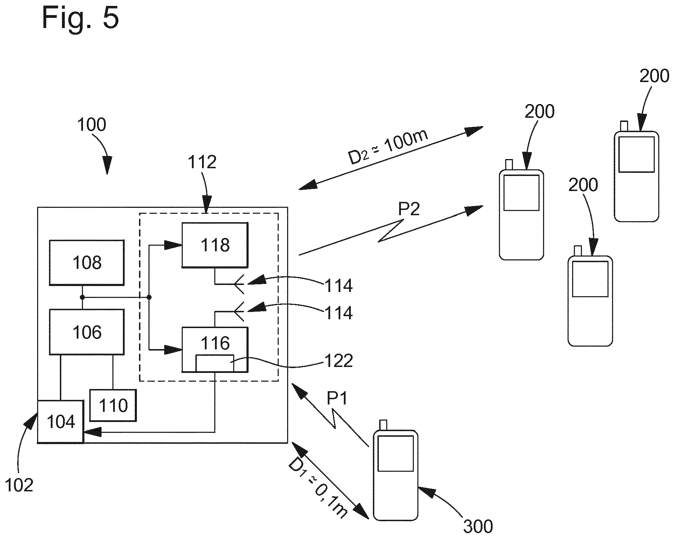

Dans un premier mode de réalisation, la première unité d'interface 116 utilisant le premier protocole P1 est utilisé pour la réception de données alors que la seconde unité d'interface 118 utilisant le second protocole P2 est utilisée pour la transmission d'information. On pourra comprendre alors que la première unité d'interface 116 et la seconde unité d'interface 118 partagent la même antenne 114 mais il est également envisageable que chaque unité d'interface est reliée à sa propre antenne 114 comme visible à la figure 5.

Cette configuration avec deux unités d'interfaces permet d'avoir deux protocoles différents pour la première unité d'interface 116 et pour la seconde unité d'interface 118 soit deux protocoles différents pour la réception de données ou la transmission de données. Ainsi, l'administrateur de cette ou ces balises pourra communiquer avec la ou les balises 100 en utilisant le premier protocole P1 alors que la ou les balises 100 communiqueront avec des terminaux mobiles clients 200 via le second protocole P2. L'administrateur communiquera avec la balise 100 via un terminal administrateur 300 pouvant par exemple être un téléphone mobile, une tablette, un ordinateur ou une montre.

Cette possibilité d'avoir deux protocoles différents pour la réception de données et pour la transmission de données permet d'utiliser un protocole sécurisé pour la réception de données.

Selon un exemple de réalisation avantageux, la première unité d'interface 116 utilise, comme premier protocole P1, le protocole de communication en champ proche (en anglais near field communication, NFC). Ce protocole NFC est une technologie de communication sans fil à courte portée et haute fréquence, permettant l'échange d'informations entre des périphériques jusqu'à une distance D1 d'environ 10 cm. La seconde unité d'interface 118 utilise, comme second protocole P2, le protocole Bluetooth dont la portée D2 peut aller de 10m à 100m selon la puissance du signal. Le protocole P2 pourra être, de façon encore plus avantageuse, un protocole basse consommation comme le protocole Bluetooth low energy (BLE).

Dans cet exemple de réalisation, la réception de données est sécurisée par deux moyens.

Premièrement, la sécurité de la communication est opérée par la faible portée d'un signal utilisant le protocole NFC qui empêche une interception dudit signal par un tiers. Deuxièmement, le protocole NFC intègre directement des algorithmes de codage de sorte qu'il n'y a pas besoin d'un signal externe pour effectuer un échange de clé de codage pour crypter la communication.

Ainsi la présente invention permet à la balise de recevoir, par un administrateur, des données de configuration ou des données d'informations de façon sécurisée tout en étant capable d'envoyer des données sur des appareils mobiles 200 à une portée supérieure à celle dont le protocole NFC est capable.

Par conséquent, l'administrateur qui souhaite envoyer des données pour programmer la balise va, en premier lieu, établir une connexion avec la balise via le premier protocole P1 c'est-à-dire le protocole de communication en champ proche (NFC). Cela lui permet d'envoyer de façon sure des données pour programmer la balise. Par exemple, ces données sont liées à son fonctionnement ou liées à l'information que ladite balise 100 diffuse.

Une fois ces données reçues par la balise 100, cette dernière va alors les utiliser soit pour se configurer soit pour transmettre une information liée à ces données. Lors de la transmission de l'information liée à ces données, la seconde unité d'interface 118 utilisant le second protocole est sélectionnée et mise en fonctionnement.

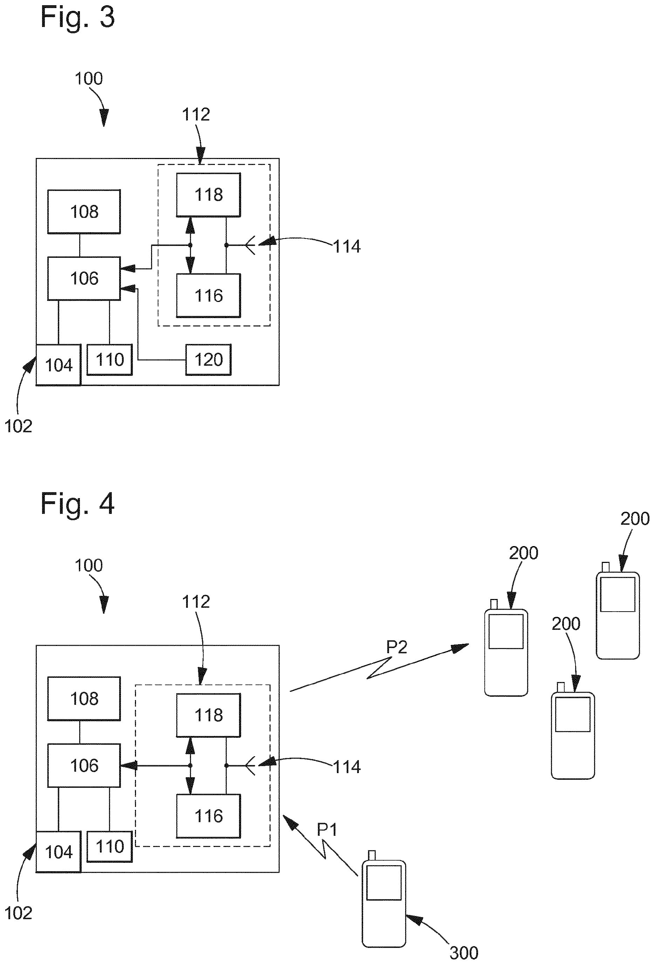

Dans une première variante visible à la figure 3, la balise 100 comprend en outre au moins un capteur 120 faisant des mesures à des intervalles plus ou moins réguliers, ces intervalles pouvant être configurés. Ce capteur 120 fournit des données d'information qui peuvent ainsi être envoyées à différents appareils mobiles 200.

Par exemple, le capteur 120 est un capteur de pression permettent de déterminer une altitude qui sera ensuite envoyée à des randonneurs les informant de l'altitude à laquelle il se trouve. Cette information d'altitude peut également servir à la calibration d'un altimètre portable équipant par exemple une montre.

Dans un autre exemple, le capteur 120 est un capteur de localisation. Ce capteur de localisation tel un capteur GPS fournit une donnée relative à une coordonnée de sorte que l'utilisateur sait où il se trouve. Un réseau comprenant une multitude de ces balises 100 peut être utilisé pour opérer une navigation, l'appareil mobile 200 de l'utilisateur étant configuré pour mesurer la puissance du signal reçu. Plus la puissance reçue augmente et plus la balise est proche.

Dans un second mode de réalisation, visible à la figure 4, il est prévu que la première unité d'interface 116 puisse communiquer de façon bidirectionnelle. En effet, il est envisageable que la première unité d'interface 116 utilisant le premier protocole P1 permettant l'envoi de données vers la balise 100 puisse être utilisée pour la transmission de données depuis la balise 100 vers un terminal administrateur 300. Cette capacité permet de transférer des données de façon sécurisée.

Cette capacité peut être, par exemple, utilisée pour télécharger des informations de configuration de la balise ou permettre l'envoi de tableaux de données issues d'un capteur vers un terminal central.

Dans un autre exemple de réalisation, cela permet d'utiliser la seconde unité d'interface 118 utilisant le protocole P2 qui peut être un protocole gourmand en énergie (Bluetooth) pour n'envoyer que des messages courts à intervalle régulier pour attirer l'attention du potentiel client / consommateur / passager. Si ce dernier est intéressé par le message reçu via le protocole P2, il devra se rapprocher de la balise pour obtenir les détails de l'offre ou du message via un protocole moins gourmand en énergie (par exemple la balise NFC peut être passive et activée par le lecteur se trouvant dans le téléphone mobile).

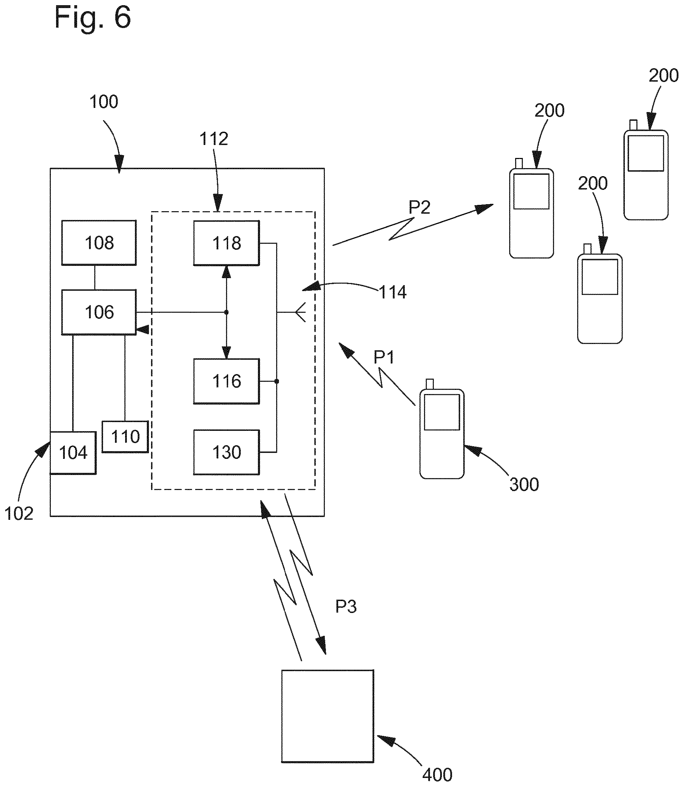

Dans un troisième mode de réalisation visible à la figure 6, la balise comprend un circuit de communication 112 muni d'une première unité d'interface 116, d'une seconde unité d'interface 118 et d'une troisième unité d'interface 130, la première unité d'interface 116 fonctionnant selon un premier protocole P1, la seconde unité d'interface 118 fonctionnant selon un second protocole P2 et la troisième unité d'interface 130 fonctionnant selon un second protocole P3. Dans ce cas là, il est envisageable que le premier protocole P1 soit un protocole ultra courte distance du type NFC, que le second protocole P2 soit un protocole courte-moyenne distance du type bluetooth et que le troisième protocole P3 soit un protocole longue distance du type GSM, UMTS.

Une tel mode de réalisation permet d'utiliser le troisième protocole P3 pour opérer une autre forme de communication. Plus particulièrement, cette troisième unité d'interface 130 fonctionnant selon un troisième protocole P3 permet avantageusement une communication en réseau 400. Pour rappel, la première unité d'interface 116 utilisant le premier protocole P1 est utilisée pour la réception de données comme la programmation alors que la seconde unité d'interface 118 utilisant le second protocole P2 est utilisée pour la transmission d'information. La troisième unité d'interface 130 fonctionnant selon un troisième protocole P3 est alors utilisée pour diffuser et/ou recevoir cette information sur un réseau 400.

Par exemple, l'enseigne X propose des produits à la vente et est munie d'une balise selon ce troisième mode de réalisation. La première unité d'interface 116 utilisant le protocole P1 permet à l'administrateur de programmer ladite balise avec une donnée A. La seconde unité d'interface 118 utilisant le protocole P2 permet de diffuser cette donnée A à tous les appareils compatibles avec ce protocole P2 alors que la troisième unité d'interface 130 utilise le protocole P3 pour transmettre cette donnée A vers une autre balise situé dans un autre point de vente de l'enseigne X.

Il devient donc possible de n'avoir qu'une seule opération de programmation d'une balise pour diffuser une donnée A vers toutes les autres balises utilisant ce troisième protocole P3.

Bien entendu, cette troisième unité d'interface 130 utilisant le protocole P3 peut être utilisée pour d'autres fonctions telles que le positionnement. Pour cela, la troisième unité d'interface 130 est utilisée pour communiquer avec d'autres balises utilisant le protocole P3 en envoyant un signal et en attendant une réponse. L'unité de calcul 106 est alors apte à analyser le niveau de puissance de la réponse reçue. En effet, plus la puissance reçue est faible et plus l'autre balise sera éloignée de sorte qu'il est possible d'avoir une position relative par rapport à plusieurs balises. Si ces balises sont en outre munies d'une coordonnée géographique alors il est possible de se repérer. Cette troisième unité d'interface 130 peut avoir sa propre antenne pour avoir une antenne commune avec les premières et secondes unités d'interface.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention défini par les revendications annexées.

Bien entendu, d'autres protocoles pourront être utilisés comme par exemple les protocoles ZigBee, Wi-Fi ou Wi-max.

Par ailleurs, la balise selon la présente invention peut être conçue pour faire de la récolte d'énergie (en anglais : energy harvesting). Pour cela, la balise est munie d'un système récupérateur d'énergie 122 utilisant de l'énergie vibratoire, chimique, solaire, éolien, thermique pour fournir de l'électricité à la balise. De même, il est envisageable que la première unité d'interface 116 utilisant le premier protocole P1 soit utilisée pour la réception de données. On comprend par-là que la première unité d'interface 116 comprenne ce système récupérateur d'énergie 122 et que les signaux reçus par cette première interface sont utilisés par le système récupérateur d'énergie pour alimenter ou recharger la balise comme visible à la figure 5.

## Revendications

1. Balise de communication (100) comprenant une unité de calcul (106) associée à une unité mémoire (108) pour la sauvegarde de données, à un circuit d'horloge (110) et un circuit de communication (112), ladite balise étant alimentée par une unité d'alimentation (104), ledit circuit de communication comprenant une première unité d'interface (116) utilisant un premier protocole (P1), au moins une seconde unité d'interface (118) utilisant un second protocole (P2) différent du premier protocole (P1), et au moins une antenne (114) permettant aux unités d'interfaces de communiquer, le premier protocole étant un protocole sécurisé de communication en champ proche (NFC) utilisé pour la réception de données, qui comprennent des données pour programmer ladite balise depuis un terminal administrateur (300) de ladite balise, alors que le second protocole est un protocole de communication Bluetooth™, qui est utilisé pour l'envoi de données à un ou plusieurs terminaux mobiles clients (200), ledit circuit de communication (112) comprenant en outre une troisième unité d'interface (130) utilisant un troisième protocole (P3), qui permet la communication avec d'autres balises de communication dont le circuit de communication (112) comprend également une troisième unité d'interface (130) utilisant le troisième protocole (P3),
**caractérisée en ce que** le troisième protocole (P3) permet de transmettre les données destinées à un ou plusieurs terminaux mobiles clients (200), vers au moins une des autres balises communiquant avec ladite balise à l'aide du troisième protocole, le troisième protocole étant un protocole de type réseau de communication cellulaire (GSM, UMTS).

2. Balise selon la revendication 1, **caractérisée en ce que** le premier protocole (P1) utilisé par la première unité d'interface (116) permet également la transmission de données.

3. Balise selon l'une des revendications précédentes, **caractérisée en ce qu'**elle comprend en outre au moins un capteur (120) de pression permettant de déterminer une altitude ou un capteur de localisation pour fournir une donnée relative à une coordonnée, ces données de mesure du capteur étant diffusées par la seconde unité d'interface.

4. Balise selon l'une des revendications précédentes, **caractérisée en ce que** des données provenant dudit au moins un capteur (120) sont enregistrées dans l'unité mémoire (108) de la balise.

5. Balise selon l'une des revendications précédentes, **caractérisée en ce que** des données peuvent être téléchargées par la première unité d'interface (116) et stockées dans l'unité mémoire (108).

6. Balise selon l'une des revendications précédentes, **caractérisée en ce que** la première unité d'interface est reliée à une première antenne et **en ce que** la seconde unité d'interface est reliée à une seconde antenne.

7. Balise selon l'une des revendications précédentes, **caractérisée en ce que** ladite balise est munie d'un système récupérateur d'énergie pour l'alimentation de ladite balise.

8. Balise selon la revendication 7, **caractérisée en ce que** la première unité d'interface (116) est utilisée comme récupérateur d'énergie pour l'alimentation de ladite balise.

9. Balise selon la revendication 1, **caractérisée en ce que** le troisième protocole (P3) est un protocole, dont la portée est supérieure à celle du second protocole (P2).

## Patentansprüche

1. Kommunikationsbake (100) mit einer Recheneinheit (106), die einer Speichereinheit (108) zur Datensicherung, einer Taktschaltung (110) und einer Kommunikationsschaltung (112) zugeordnet ist, wobei die Bake von einer Versorgungseinheit (104) versorgt wird, und die Kommunikationsschaltung eine erste Schnittstelleneinheit (116) unter Verwendung eines ersten Protokolls (P1), mindestens eine zweite Schnittstelleneinheit (118) unter Verwendung eines zweiten Protokolls (P2), das sich von dem ersten Protokoll (P1) unterscheidet, und mindestens eine Antenne (114), die es den Schnittstelleneinheiten ermöglicht zu kommunizieren, umfasst, wobei das erste Protokoll ein gesichertes Nahfeldkommunikations (NFC)-Protokoll ist, das für den Empfang von Daten verwendet wird, die Daten zum Programmieren der Bake von einem Administratorendgerät (300) der Bake enthalten, während das zweite Protokoll ein Bluetooth™-Kommunikationsprotokoll ist, das zum Senden von Daten an ein oder mehrere mobile Client-Endgeräte (200) verwendet wird, und die Kommunikationsschaltung (112) ferner eine dritte Schnittstelleneinheit (130) unter Verwendung eines dritten Protokolls (P3) umfasst, das die Kommunikation mit anderen Kommunikationsbaken ermöglicht, deren Kommunikationsschaltung (112) ebenfalls eine dritte Schnittstelleneinheit (130) unter Verwendung des dritten Protokolls (P3) umfasst,
**dadurch gekennzeichnet, dass** das dritte Protokoll (P3) ermöglicht, Daten, die für ein oder mehrere mobile Client-Endgeräte (200) bestimmt sind, zu mindestens einer der anderen Baken zu übertragen, die mit der Bake mit Hilfe des dritten Protokolls kommuniziert, wobei das dritte Protokoll ein Protokoll vom Typ Mobilfunknetz (GSM, UMTS) ist.

2. Bake nach Anspruch 1, **dadurch gekennzeichnet, dass** das von der ersten Schnittstelleneinheit (116) verwendete erste Protokoll (P1) ferner die Datenübertragung ermöglicht.

3. Bake nach einem der vorhergehenden Ansprüche, **dadurch gekennzeichnet, dass** sie ferner mindestens einen Drucksensor (120) zum Bestimmen einer Höhenlage oder einen Standortsensor, um Daten bezüglich einer Koordinate bereitzustellen, umfasst, wobei diese Messdaten des Sensors durch die zweite Schnittstelleneinheit gesendet werden.

4. Bake nach einem der vorhergehenden Ansprüche, **dadurch gekennzeichnet, dass** die von dem mindestens einen Sensor (120) stammenden Daten in der Speichereinheit (108) der Bake aufgezeichnet sind.

5. Bake nach einem der vorhergehenden Ansprüche, **dadurch gekennzeichnet, dass** die Daten von der ersten Schnittstelleneinheit (116) heruntergeladen und in der Speichereinheit (108) gespeichert werden können.

6. Bake nach einem der vorhergehenden Ansprüche, **dadurch gekennzeichnet, dass** die erste Schnittstelleneinheit mit einer ersten Antenne verbunden ist und dass die zweite Schnittstelleneinheit mit einer zweiten Antenne verbunden ist.

7. Bake nach einem der vorhergehenden Ansprüche, **dadurch gekennzeichnet, dass** die Bake mit einem Energierückgewinnungssystem zur Versorgung der Bake versehen ist.

8. Bake nach Anspruch 7, **dadurch gekennzeichnet, dass** die erste Schnittstelleneinheit (116) als Energierückgewinnungseinheit zur Versorgung der Bake verwendet wird.

9. Bake nach Anspruch 1, **dadurch gekennzeichnet, dass** das dritte Protokoll (P3) ein Protokoll ist, dessen Reichweite größer als jene des zweiten Protokolls (P2) ist.

## Claims

1. Communication beacon (100) comprising a computation unit (106) associated with a memory unit (108) for storing data, with a clock circuit (110), and a communication circuit (112), said beacon being powered by a power unit (104), said communication circuit comprising a first interface unit (116) using a first protocol (P1), at least one second interface unit (118) using a second protocol (P2), which is different from the first protocol (P1), and at least one antenna (114) enabling the interface units to communicate, the first protocol being a secure near-field communication (NFC) protocol used to receive data, which comprise data for programming said beacon from an administrator terminal (300) of said beacon, whereas the second protocol is a Bluetooth™ communication protocol, which is used to send data to one or more client mobile terminals (200), said communication circuit (112) further comprising a third interface unit (130) using a third protocol (P3), which enables communication with other communication beacons, the communication circuit (112) whereof also comprises a third interface unit (130) using the third protocol (P3),
**characterised in that** the third protocol (P3) enables the data intended for one or more client mobile terminals (200) to be transmitted to at least one of the other beacons communicating with said beacon by way of the third protocol, the third protocol being a protocol of the cellular communication network type (GSM, UMTS).

2. Beacon according to claim 1, **characterised in that** the first protocol (P1) used by the first interface unit (116) further enables transmission of data.

3. Beacon according to one of the preceding claims, **characterised in that** it further comprises at least one pressure sensor (120) enabling an altitude to be determined, or a localisation sensor for providing a datum relative to a coordinate, this measurement data from the sensor being broadcast by the second interface unit.

4. Beacon according to one of the preceding claims, **characterised in that** data originating from said at least one sensor (120) are recorded in the memory unit (108) of the beacon.

5. Beacon according to one of the preceding claims, **characterised in that** data can be downloaded by the first interface unit (116) and stored in the memory unit (108).

6. Beacon according to one of the preceding claims, **characterised in that** the first interface unit is connected to a first antenna and **in that** the second interface unit is connected to a second antenna.

7. Beacon according to one of the preceding claims, **characterised in that** said beacon is provided with an energy-harvesting system in order to power said beacon.

8. Beacon according to claim 7, **characterised in that** the first interface unit (116) is used as an energy harvester in order to power said beacon.

9. Beacon according to claim 1, **characterised in that** the third protocol (P3) is a protocol, the range whereof is greater than that of the second protocol (P2).
